# EUROPÄISCHE PATENTSCHRIFT

(11) **EP 2 828 462 B1**
(45) Veröffentlichungstag und Bekanntmachung des Hinweises auf die Patenterteilung: **15.06.2016**
(21) Anmeldenummer: 13713396.3
(22) Anmeldetag: 20.03.2013
(51) Int. Cl.: E06C 1/38, E06C 7/18, E06C 9/02, A62B 35/00

(54) **STEIGSPERRENSYSTEM FÜR STEIGLEITERN**
CLIMBING LOCKING SYSTEM FOR VERTICAL LADDERS
SYSTÈME EMPÊCHANT DE MONTER DESTINÉ À DES ÉCHELLES

(30) Priorität: 22.03.2012 DE 102012204643
(43) Veröffentlichungstag der Anmeldung: 28.01.2015
(73) Patentinhaber: Logaer Maschinenbau GmbH, 26789 Leer (DE); Wobben Properties GmbH, 26607 Aurich (DE)
(72) Erfinder: HERMES, Arthur, 26629 Großefehn (DE); ROTH, Simon, 26639 Wiesmoor (DE)
(74) Vertreter: Eisenführ Speiser
(86) Internationale Anmeldenummer: PCT/EP2013/055850
(87) Internationale Veröffentlichungsnummer: WO 2013/139865

(56) Entgegenhaltungen:
- DE-C1- 19 701 076
- DE-U1- 8 811 779
- DE-U1-202006 017 158
- DE-U1-202009 008 336
- DE-U1-202009 015 227

## Beschreibung

Die vorliegende Erfindung betrifft ein Steigsperrensystem insbesondere für ortsfeste Steigleitern mit fertiger Führung.

Steigleitern beispielsweise mit C-förmigem Mittelholm als feste Führung und einer Mehrzahl von Sprossen oder Tritten werden z. B. in Türmen von Windenergieanlagen verwendet. Der C-förmige Mittelholm dient dazu, einen Läufer aufzunehmen, an welchem ein Auffanggurt befestigt werden kann. Die Steigleitern bestehen typischerweise aus einer Mehrzahl von Steigleitersegmenten sowie einer Mehrzahl von Sprossen.

Bei der Montage eines Turms einer Windenergieanlage werden typischerweise eine Mehrzahl von Turmsegment-Fertigteilen aufeinander gesetzt. Diese Turmsegment-Fertigteile weisen typischerweise mindestens ein vormontiertes Steigleitersegment auf. Wenn ein Turmsegment auf ein anderes gesetzt wird, dann müssen auch die Steigleitersegmente miteinander verbunden werden. Wenn der Turm einer Windenergieanlage jedoch noch nicht vollständig aufgebaut ist, dann kann es vorkommen, dass ein Turmsegment ein Steigleitersegment aufweist, welches noch nicht an dem Steigleitersegment eines darüber zu montierenden Turmsegmentes befestigt ist. In einem derartigen Fall ist das obere Ende des Steigleitersegmentes offen. Zur Sicherung des offenen Endes eines Steigleitersegmentes müssen entsprechende Gegenmaßnahmen getroffen werden.

In der prioritätsbegründenden deutschen Patentanmeldung wurden die folgenden Dokumente recherchiert: DE 197 01 076 C1, DE 295 20 679 U1, DE 88 11 779 U1 und DE 20 2006 017 158 U1.

DE 197 01 076 C1 offenbart ein Steigsparensystem gemäß dem Oberbegriff des Anspruchs 1.

Es ist somit eine Aufgabe der vorliegenden Erfindung, ein Steigsperrensystem mit einem Steigsperrsystem vorzusehen, welches eine effektive Sicherung eines offenen Endes eines Steigleitersegmentes in jedem Montagezustand verhindert.

Diese Aufgabe wird durch ein Steigsperrensystem nach Anspruch 1 gelöst.

Somit wird ein Steigsperrensystem für Steigleitern insbesondere einer Windenergieanlage vorgesehen. Das Steigsperrensystem weist mindestens ein Steigleitersegment mit einer Längsrichtung und mindestens einem offenen Ende zur Aufnahme eines Auffanggerätes auf, das sich als Steigschutzsystem entlang der Längsrichtung hin und her bewegen kann. Das Steigsperrensystem weist ferner mindestens eine Steigsperreneinheit an dem mindestens einen offenen Ende des Steigleitersegmentes auf. Die Steigsperreneinheit ist verschwenkbar an dem Steigleitersegment befestigt und weist eine Sperrposition zum Sperren einer Bewegung eines Auffanggerätes entlang einer Richtung des Steigleitersegmentes und eine Durchlassposition zum Durchlassen einer Bewegung des Auffanggerätes entlang der Längsrichtung des Steigleitersegmentes in beide Richtungen auf.

Gemäß der vorliegenden Erfindung weist die Steigsperreneinheit einen Sperrpunkt derart auf, dass die Steigsperreneinheit ohne externe Einwirkung und auf Grund der Schwerkraft in die Sperrposition fällt.

Gemäß der vorliegenden Erfindung weist das Steigsperrensystem eine Deaktivierungseinheit zum Eingreifen in die Steigsperreneinheit und zum Halten der Steigsperreneinheit in der Durchlassposition auf.

Gemäß einem Aspekt der vorliegenden Erfindung weist das Steigsperrensystem eine Steigsperreneinheit mit einem Halter, welcher an dem Steigleitersegment befestigt ist, und einen Sperrbolzen auf. Der Sperrbolzen sperrt das Steigleitersegment in einer Sperrposition zumindest in eine Richtung und ermöglicht in der Durchlassposition eine Bewegung des Auffanggerätes in zwei Richtungen.

Gemäß einem weiteren Aspekt der vorliegenden Erfindung weist das Steigsperrensystem eine Steigsperreneinheit mit mindestens einem Block zur Aufnahme eines Schwenkbolzens auf. Die Steigsperreneinheit ist durch den Schwenkbolzen schwenkbar.

Die Deaktivierungseinheit kann eine Steigsperreneinheit eines ersten und zweiten Steigleitersegmentes in der Durchlassposition halten.

Gemäß der Erfindung wird ein Steigsperrensystem mit einer deaktivierbaren Steigsperre vorgesehen. Die deaktivierbare Steigsperre wird vorzugsweise bei der Vormontage oder ab Werk an einem (offenen) Ende eines Steigleitersegmentes befestigt. Die deaktivierbaren Steigsperren können an den offenen Steigleiterenden oben und unten vorgesehen werden. Vorzugsweise kann ein Läufer bzw. ein Auffanggerät oder mitlaufendes Auffanggerät für ein Auffanggerät (z. B. gemäß EN 353-1) in einer Richtung barrierefrei durch die Steigsperre geführt werden (nach unten oder nach oben), und in der entgegengesetzten Richtung (nach oben oder nach unten) wird das Auffanggerät jedoch gestoppt. Die deaktivierbare Steigsperre kann erst nach einem bewussten Zurückstellen einer Steigsperre bzw. Sperrklinke deaktiviert werden, so dass ein Auffanggerät nach oben (oder nach unten) aus dem offenen Ende des Steigleitersegmentes herausgeführt wird. Zu diesem Zeitpunkt sollte sich eine Montageperson bereits an anderer Stelle abgesichert haben.

Gemäß der vorliegenden Erfindung weist das Steigsperrensystem eine Deaktivierungseinheit auf, welche beispielsweise dann, wenn das freie Ende eines Steigleitersegmentes mit einem anderen Steigleitersegment verbunden worden ist und die Steigsperren an dieser Verbindungsstelle nicht mehr benötigt werden, mit beiden Steigsperren bzw. Sperrklinken verbunden wird, so dass die beiden Sperrklinken in einem deaktivierten Zustand gehalten werden. Die Deaktivierungseinheit wird so installiert, dass ein Lösen der Verbindung der Steigleitersegmente erst nach Reaktivierung der Steigsperren möglich ist.

Gemäß der Erfindung weist das Steigsperrensystem mindestens eine schwenkbare Sperrklinke auf. Die schwenkbare Sperrklinke weist einen Schwerpunkt derart auf, dass die Sperrklinke im normalen Betriebszustand eine Sperrung eines Läufers eines Auffanggerätes in einer Richtung vorsieht. Um die Sperrklinke zu deaktivieren, muss die Sperrklinke in einem zweiten Betriebszustand verschwenkt werden.

Die Erfindung betrifft ebenfalls ein Turmsegment eines Windenergieanlagen-Turms mit einem oben beschriebenen Steigsperrensystem sowie eine Windenergieanlage mit einem Turm mit mindestens einem oben beschriebenen Turmsegment.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine perspektivische Ansicht eines Abschnitts eines Steigleitersegmentes mit einem Steigleiterschutzsystem,
- Fig. 2A bis 2C: zeigen verschiedene Ansichten eines Ausschnitts eines Steigleitersegmentes mit einem Steigsperrensystem,
- Fig. 3A bis 3C: zeigen verschiedene Ansichten eines Ausschnittes eines Steigleitersegmentes mit einem Steigsperrensystem,
- Fig. 4A und 4B: zeigen jeweils verschiedene perspektivische Ansichten eines Steigschutzsystems,
- Fig. 4C: zeigt eine perspektivische Ansicht eines Abschnitts eines Steigleitersegmentes mit einem Steigsperrensystem,
- Fig. 5A und 5B: zeigen jeweils eine perspektivische Ansicht eines Steigsperrensystems,
- Fig. 5C: zeigt einen Ausschnitt eines Steigleitersegmentes mit einem Steigsperrensystem,
- Fig. 6: zeigt eine perspektivische Ansicht einer Steigleiter mit zwei Steigsperrensystemen gemäß einem Ausführungsbeispiel, und
- Fig. 7: zeigt eine perspektivische Explosionsdarstellung der Steigleiter und zweier Steigsperrensysteme gemäß einem Ausführungsbeispiel.

Die erfindungsgemäße Steigleiter mit dem erfindungsgemäßen Steigsperrensystem wird beispielsweise in Türmen von Windenergieanlagen verwendet. Typischerweise bestehen die Steigleitern aus einer Mehrzahl von Steigleitersegmenten, welche vorzugsweise bei der Vormontage bereits an Segmenten eines Turms einer Windenergieanlage befestigt werden.

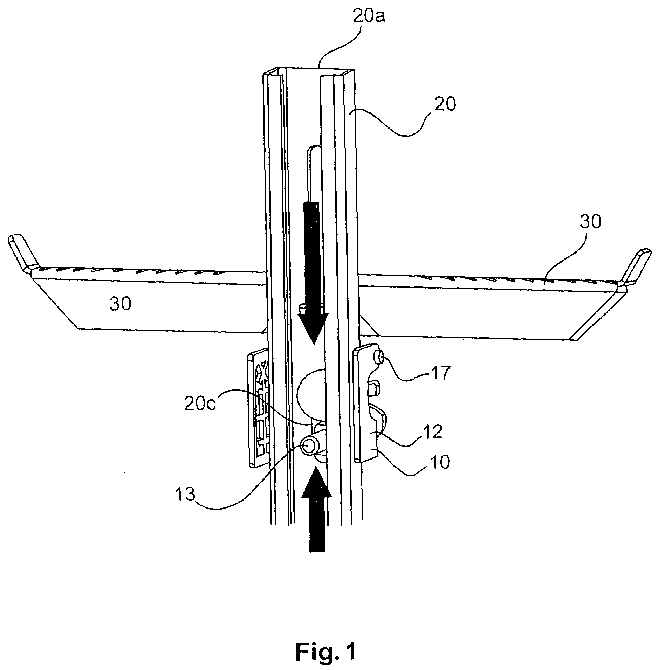

Fig. 1 zeigt eine perspektivische Ansicht eines Abschnitts eines Steigleitersegmentes mit einem Steigleiterschutzsystem. In Fig. 1 ist ein Steigleitersegment 20 mit einem Tritt oder einer Sprosse 30 gezeigt. Das Steigleitersegment 20 weist ein nach oben offenes Ende 20a auf. Das Steigleitersegment 20 ist beispielsweise als ein C-Profil ausgestaltet. Innerhalb des C-Profils kann ein Läufer bzw. ein Auffanggeräts oder ein mitlaufendes Auffanggerät (nicht gezeigt) in Verbindung mit einem Auffanggurt bewegt werden. Das Steigleitersegment 20 weist im Bereich des offenen Endes 20a ein Langloch 20c auf, durch welches ein Steigsperrensystem 10 gemäß einem ersten Ausführungsbeispiel derart in das C-Profil des Steigleitersegmentes 20 hineinragt, dass eine Bewegung des Läufers des Auffanggurtes ein (mitlaufendes) Auffanggerät lediglich in eine Richtung (nach unten) möglich ist. Eine Bewegung des Läufers nach oben wird durch das Steigsperrensystem verhindert. Hierdurch soll insbesondere verhindert werden, dass bei einem Aufbau eines Turms der Windenergieanlage Monteure, welche durch einen Auffanggurt und einen Läufer in dem C-Profil des Steigleitersegmentes 20 gesichert sind, den Läufer unbeabsichtigt aus dem offenen Ende 20a herausnehmen können, ohne dabei weiter bzw. zusätzlich gesichert zu sein.

Das Steigsperrensystem 10 weist einen Drehbolzen 17, einen Halter 12 und einen Sperrbolzen 13 auf. Im Bereich des Drehbolzens 17 ist ein Drehpunkt vorgesehen, so dass der Halter 12 verschwenkt werden kann. Beim Verschwenken des Halters 12 wird der Sperrbolzen 13 nach hinten bewegt, so dass der Weg für einen Läufer nach oben freigegeben wird.

Gemäß kann ein Läufer eines Auffanggurtes in das obere Ende 20a eingeführt und nach unten geführt werden. Der Läufer (ein mitlaufendes Auffanggerät) kann jedoch, nachdem er das Sperrschutzsystem passiert hat, nicht wieder ohne Entriegelung des Sperrsperrensystemes nach oben bewegt werden. Zum Deaktivieren des Steigsperrensystemes muss der Monteur den Halter 12 nach hinten in eine Durchlassposition verschwenken, so dass der Sperrbolzen 13 aus dem C-Profil des Steigleitersegmentes 20 verschwenkt wird. Vorzugsweise ist der Schwerpunkt des Halters 12 so vorgesehen, dass sich der Sperrbolzen 13 ohne Einwirkung durch einen Monteur in die Sperrposition selbständig aufgrund der Schwerkraft zurück verschwenkt. Aufgrund der Ausbildung des Halters 12 kann optional ein mitlaufendes Auffanggerät, welches einen Sicherungsstift besitzt, nicht verkehrt in das C-Profil eingeführt werden.

Gemäß der Erfindung kann das Steigsperrensystem eine Sperreinheit für ein oberes offenes Ende und eine Sperreinheit für ein unteres offenes Ende aufweisen.

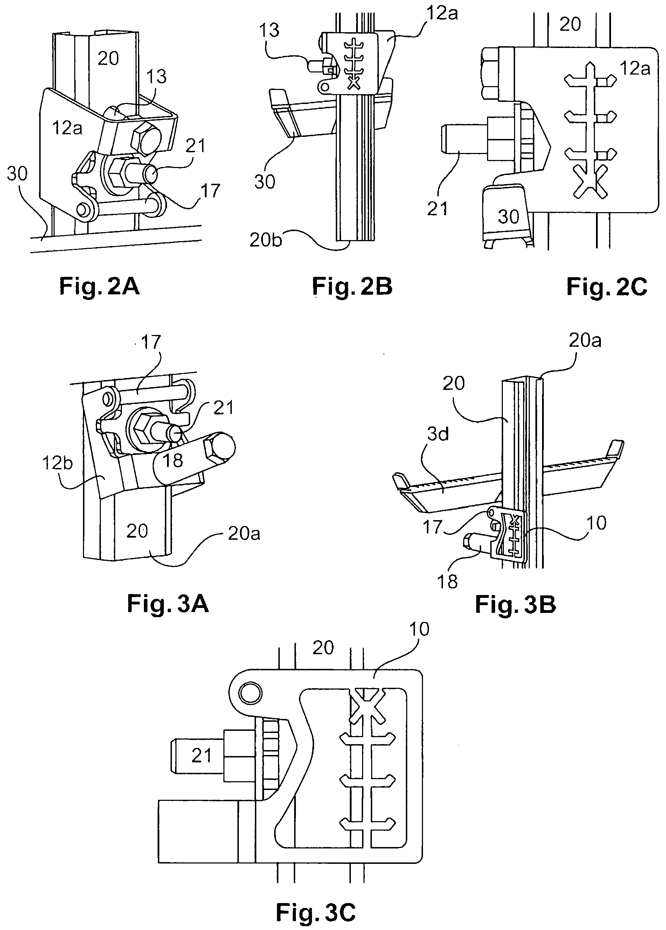

Fig. 2A bis 2C zeigen verschiedene Ansichten eines Ausschnitts eines Steigleitersegmentes mit einem Steigsperrensystem. In Fig. 2A bis 2C ist insbesondere eine Steigsperreneinheit für ein unteres offenes Ende 20b eines Steigleitersegmentes gezeigt. In den Fig. 2A bis 2C ist ein Steigleitersegment 20 mit einer Sprosse bzw. Tritt 30 gezeigt. Die Steigsperreneinheit 10 weist einen Halter 12, einen Schwenkbolzen 17 und einen Sperrbolzen 13 auf. Mittels einer Schraube 21 kann die Steigsperreneinheit an dem Steigleitersegment 20 befestigt werden. Die Steigsperreneinheit kann zwischen einer Sperrposition und einer Durchlassposition verschwenkt werden. Der Bolzen 17 stellt dabei die Schwenkachse dar. In der Sperrposition greift der Sperrbolzen 13 in das C-Profil ein, so dass ein Läufer mit einem Auffanggurt nicht weiter nach unten bewegt werden kann. Zum Freigeben wird die Steigsperreneinheit 10 (Sperrklinke) nach hinten verschwenkt, so dass der Sperrbolzen 13 nicht mehr in das C-Profil des Steigleitersegmentes eingreift. Durch die Verschwenkbarkeit der Steigsperreneinheit kann ein Läufer nach oben, jedoch nicht nach unten bewegt werden. Der Läufer kann nur dann nach unten bewegt werden, wenn der Monteur die Steigsperreneinheit bewusst verschwenkt. Die Steigsperreneinheit ist derart ausgestaltet, dass sie selbständig in die Sperrposition fällt. Dies wird durch die Ausgestaltung des Schwerpunktes der Steigsperreneinheit erreicht werden.

Fig. 3A bis 3C zeigen verschiedene Ansichten eines Ausschnittes eines Steigleitersegmentes mit einem Steigsperrensystem. In den Fig. 3A bis 3C ist eine Steigsperreneinheit für ein oberes offenes Ende eines Steigleitersegmentes gezeigt. Während bei der Steigsperreneinheit für ein unteres offenes Ende der Schwenkbolzen unterhalb des Sperrbolzens 13 angeordnet ist, ist bei einer Sperrschutzeinheit für ein oberes offenes Ende der Schwenkbolzen 17 oberhalb des Sperrbolzens 13 angeordnet. Der Schwerpunkt der Sperrschutzeinheit für das obere offene Ende 20a ist so ausgewählt, dass sich der Halter 12b in Ruheposition in Sperrposition befindet. Erst wenn der Halter 12b verschwenkt wird, wird die Steigsperreneinheit entriegelt und der Läufer kann entsprechend innerhalb des C-Profils 20 bewegt werden.

Somit kann ein Läufer eines Auffanggurtes ohne Weiteres nach unten, nicht jedoch nach oben bewegt werden.

Bei der Steigsperreneinheit von Fig. 2A ist dies genau umgekehrt, hier kann der Läufer (mitlaufendes Auffanggerät) eines Auffanggurtes ohne Weiteres nach oben, nicht jedoch nach unten bewegt werden, da eine Bewegung nach unten durch die Sperrposition des Halters 12a blockiert wird.

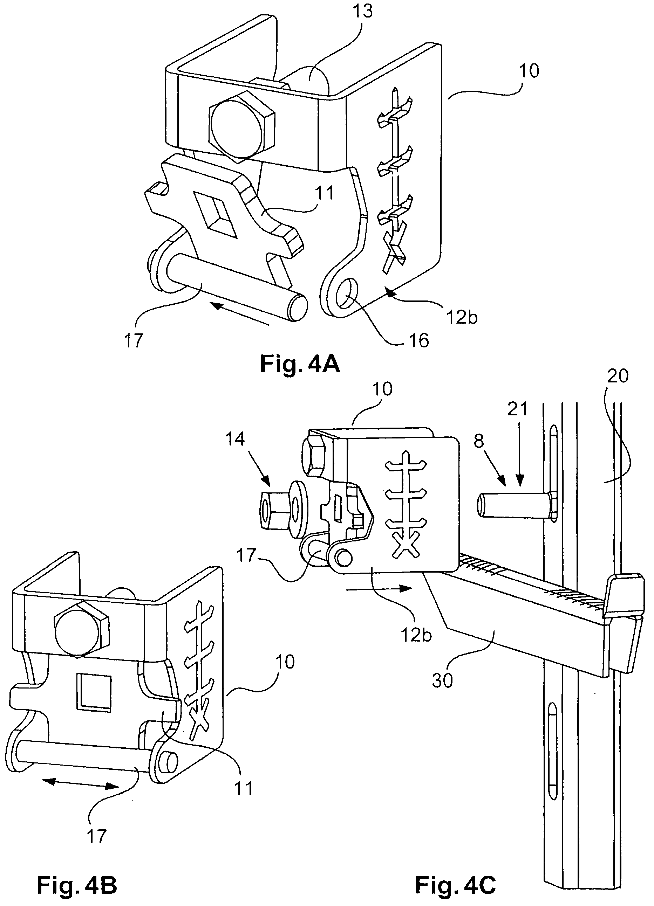

Fig. 4A, 4B und 4C zeigen jeweils verschiedene perspektivische Ansichten eines Steigsperrensystemes. In Fig. 4A und 4B ist der Halter 12b gezeigt. Der Halter 12b weist zwei gegenüberliegende Löcher 16 auf, in welche der Schwenkbolzen 17 zusammen mit der Halteplatte 11 eingeführt werden kann. Die Halteplatte 11 ist fest an dem Schwenkbolzen 17 befestigt. Der Halter 12b weist ferner einen Sperrbolzen 13 auf. Mittels der Halteplatte 11 und einer Schraube 21 kann der Halter an dem C-Profil 20 befestigt werden, so dass der Halter um den Schwenkbolzen 17 geschwenkt werden kann.

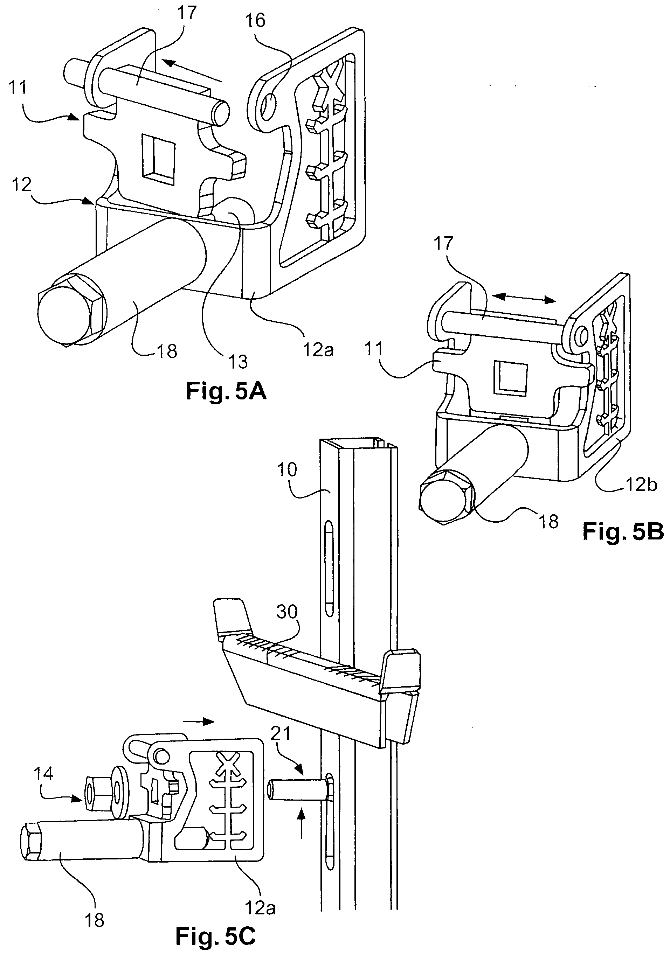

Fig. 5A, 5B und 5C zeigen jeweils eine perspektivische Ansicht eines Steigsperrensystemes. Der Halter 12a für ein unteres offenes Ende eines Steigleitersegmentes ist im Wesentlichen entsprechend zu dem Halter 12b aufgebaut. Der Halter 12a weist zwei Löcher 16 zur Aufnahme eines Schwenkbolzens 17 und einer Halterplatte 11 auf. Ferner weist der Halter 12a einen Sperrbolzen 13 auf. Optional kann der Halter 12a einen Bolzen 18 aufweisen, welcher das Gewicht (bzw. Kontergewicht) für eine korrekte Schwerpunktlage der Sperrklinke vorsieht. Zur Entriegelung kann der Halter verwendet werden.

Das Deaktivierungssystem hat den bestimmungsgemäßen Vorzug, dass es das Lösen der Verbindung der Steigleitersegmente (20) durch das Verbindungsblech (41) und die Verschraubungen (42) erst nach ihrer Entfernung und der Wiederaktivierung der Sperrklinken gestattet, so dass diese Steigsperren bereits vor einer Steigleiter-Demontage eine Gefährdung durch die dann entstehenden offene, Enden (20) ausschließt.

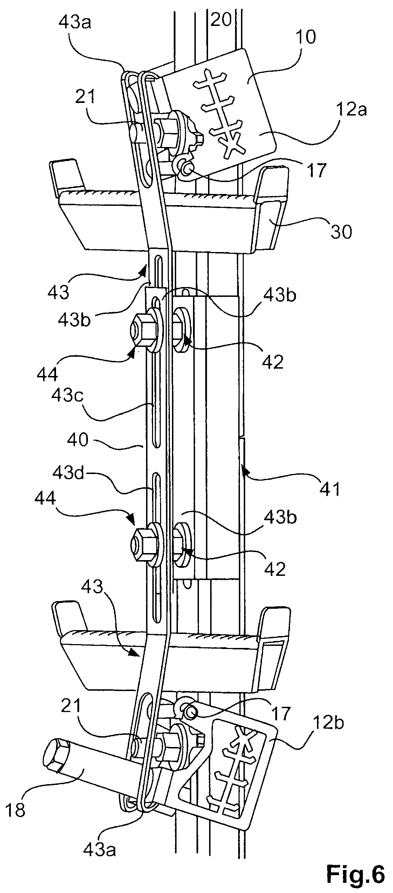

Fig. 6 zeigt eine perspektivische Ansicht einer Steigleiter mit zwei Steigsperrensystemen gemäß einem Ausführungsbeispiel. In Fig. 6 sind zwei ineinander bzw. aneinander montierte Steigleitersegmente 20 gezeigt. Da nunmehr kein offenes Ende an den Steigleitersegmenten vorhanden ist, werden die Steigsperreneinheiten nicht mehr benötigt und sollen permanent deaktiviert werden. Dies erfolgt über eine Deaktivierungseinheit 40. Die Deaktivierungseinheit 40 kann beispielsweise aus zwei Blechen 43 bestehen. Das Blech 43 weist ein erstes Ende 30a auf, welches als Haken ausgestaltet ist und in einen Halter der Steigsperreneinheit eingreifen kann. Das Blech 43 weist ferner zwei Langlöcher 43c, 43d auf.

Die beiden Steigleitersegmente 20 können beispielsweise mittels eines Bleches 41 ineinander befestigt werden. Die Deaktivierungseinheit besteht vorzugsweise aus zwei Blechen 43, wobei die hakenförmigen Enden 43a der Bleche jeweils in eine der Sperrschutzeinheiten eingreifen und die Sperrschutzeinheit in einem entsperrten bzw. deaktivierten Zustand halten. Mittels Sechskantmuttern 44 können die beiden Bleche dann befestigt werden.

Ein Lösen des Bleches erfordert zuerst ein Lösen der Muttern 44, so dass die Steigsperreneinheiten wieder aktiviert sind.

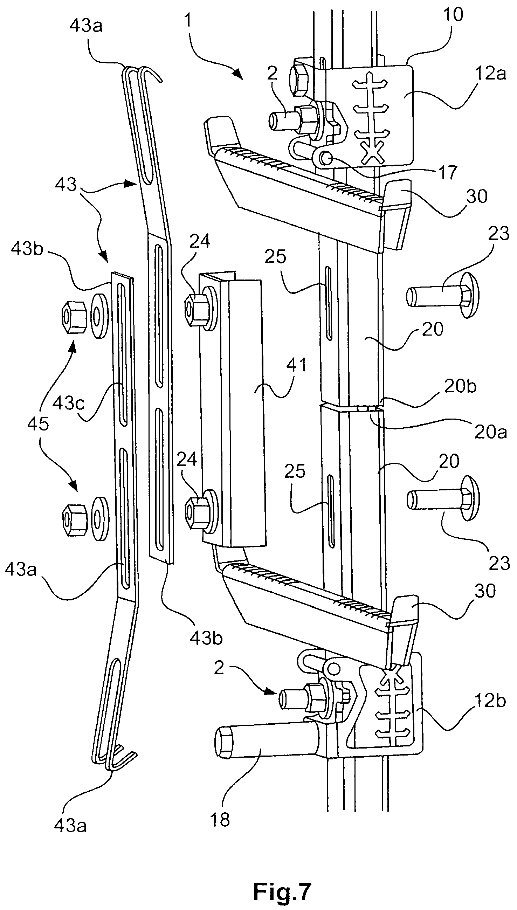

Fig. 7 zeigt eine perspektivische Explosionsdarstellung der Steigleiter und zweier Steigsperrensysteme gemäß einem Ausführungsbeispiel. Zwei Steigleitersegmente 20 werden Stoß an Stoß angeordnet und können mit dem Blech 41 sowie den Schrauben 23 und den Langlöchern 25 befestigt werden. Die Deaktivierungseinheit 40 bestehend aus zwei Blechen 43 wird in die Steigsperreneinheiten eingehakt und an dem Blech derart befestigt, dass die beiden Steigsperreneinheiten deaktiviert sind.

Somit müssen die Steigsperreneinheiten nicht demontiert werden, nachdem zwei Steigsperrensegmente fest miteinander verbunden sind (nach oben und unten) und können frei passiert werden.

## Patentansprüche

1. Steigsperrensystem für Steigleitern, mit
mindestens einem Steigleitersegment (20) mit einer Längsrichtung und mindestens einem offenen Ende (20a, 20b) zur Aufnahme eines Auffanggerätes, das sich als Steigschutzsystem entlang der Längsrichtung hin und her bewegen kann, und
mindestens einer Steigsperreneinheit (10) an dem mindestens einen offenen Ende (20a, 20b) des Steigleitersegmentes (20),
wobei die Steigsperreneinheit (10) verschwenkbar an dem Steigleitersegment (20) befestigt ist und eine Sperrposition zum Sperren einer Bewegung eines Auffanggerätes entlang einer Richtung des Steigleitersegmentes (20) und eine Durchlassposition zum Durchlassen einer Bewegung des Auffanggerätes entlang der Längsrichtung des Steigleitersegmentes (20) in zwei Richtungen aufweist,
einer Deaktivierungseinheit (40), zum Eingreifen in die Steigsperreneinheit (10) und zum Halten der Steigsperreneinheit (10) in der Durchlassposition, **dadurch gekennzeichnet, daß** die Steigsperreneinheit (10) einen Schwerpunkt derart aufweist, dass die Steigsperreneinheit (10) ohne externe Einwirkung und auf Grund der Schwerkraft in die Sperrposition fällt.

2. Steigsperrensystem nach Anspruch 1, wobei
die Steigsperreneinheit (10) einen Halter (12), welcher an dem Steigleitersegment (20) befestigt ist, und einen Sperrbolzen (13) aufweist,
wobei der Sperrbolzen (13) das Steigleitersegment (20) in einer Sperrposition zumindest in eine Richtung sperrt und in der Durchlassposition eine Bewegung des Auffanggerätes in zwei Richtungen ermöglicht.

3. Steigsperrensystem nach Anspruch 1 oder 2, wobei
die Steigsperreneinheit (10) mindestens ein Loch (16) zur Aufnahme eines Schwenkbolzens (17) aufweist,
wobei die Steigsperreneinheit durch den Schwenkbolzen (17) schwenkbar ist.

4. Steigsperrensystem nach Anspruch 1, mit
mindestens zwei ineinander gesteckten Steigleitersegmenten (20), wobei ein erstes Ende der Deaktivierungseinheit (40) in die Steigsperreneinheit (10) des ersten Steigleitersegmentes und ein zweites Ende der Deaktivierungseinheit (40) in die Steigsperreneinheit (10) des zweiten Steigleitersegmentes eingreift und beide Steigsperreneinheiten (10) in der Durchlassposition hält.

5. Turmsegment eines Turms einer Windenergieanlage, mit einem Steigsperrensystem nach einem der Ansprüche 1 bis 4.

6. Windenergieanlage mit mindestens einem Turmsegment nach Anspruch 5.

## Claims

1. Climbing blocking system for ladders, having
at least one ladder segment (20) with a longitudinal direction and at least one open end (20a, 20b) for receiving an arresting device which can move back and forth in the longitudinal direction as a climbing protection system, and
at least one climbing blocking unit (10) on the at least one open end (20a, 20b) of the ladder segment (20),
wherein the climbing blocking unit (10) is pivotably secured to the ladder segment (20) and has a blocking position for blocking a movement of an arresting device in a direction of the ladder segment (20) and a passage position for allowing a movement of the arresting device in the longitudinal direction of the ladder segment (20) in two directions,
a deactivation unit (40) for engagement in the climbing blocking unit (10) and for retaining the climbing blocking unit (10) in the passage position, **characterised in that** the climbing blocking unit (10) has such a centre of gravity that the climbing blocking unit (10) falls into the blocking position without external action and as a result of gravitational force.

2. Climbing blocking system according to claim 1, wherein
the climbing blocking unit (10) has a retention member (12) which is secured to the ladder segment (20) and which has a blocking pin (13),
wherein the blocking pin (13) in a blocking position blocks the ladder segment (20) in at least one direction and in the passage position allows a movement of the arresting device in two directions.

3. Climbing blocking system according to claim 1 or claim 2, wherein
the climbing blocking unit (10) has at least one hole (16) for receiving a pivot pin (17),
wherein the climbing blocking unit can be pivoted by means of the pivot pin (17).

4. Climbing blocking system according to claim 1, having at least two ladder segments (20) which are inserted one in the other, wherein a first end of the deactivation unit (40) engages in the climbing blocking unit (10) of the first ladder segment and a second end of the deactivation unit (40) engages in the climbing blocking unit (10) of the second ladder segment and retains both climbing blocking units (10) in the passage position.

5. Tower segment of a tower of a wind turbine having a climbing blocking system according to any one of claims 1 to 4.

6. Wind turbine having at least one tower segment according to claim 5.

## Revendications

1. Système empêchant de monter destiné à des échelles avec
au moins un segment d'échelle (20) avec un sens longitudinal et au moins une extrémité ouverte (20a, 20b) pour la réception d'un appareil collecteur qui peut se déplacer alternativement comme système de protection à la montée le long du sens longitudinal et
au moins une unité empêchant de monter (10) sur l'au moins une extrémité ouverte (20a, 20b) du segment d'échelle (20),
l'unité empêchant de monter (10) étant fixée de manière pivotante sur le segment d'échelle (20) et présentant une position de blocage pour empêcher un mouvement d'un appareil collecteur selon un sens du segment d'échelle (20) et une position de passage pour le passage d'un mouvement de l'appareil collecteur selon le sens longitudinal du segment d'échelle (20) dans deux directions,
une unité de désactivation (40) pour l'engagement dans l'unité empêchant de monter (10) et pour le maintien de l'unité empêchant de monter (10) dans la position de passage, **caractérisé en ce que** l'unité empêchant de monter (10) présente un centre de gravité de telle manière que l'unité empêchant de monter (10) tombe sans effet externe et en raison de la force de gravité dans la position de blocage.

2. Système empêchant de monter selon la revendication 1,
l'unité empêchant de monter (10) présentant un support (12) qui est fixé sur le segment d'échelle (20), et un boulon de blocage (13),
le boulon de blocage (13) bloquant le segment d'échelle (20) dans une position de blocage au moins dans une direction et permettant, dans la position de passage, un mouvement de l'appareil collecteur dans deux directions.

3. Système empêchant de monter selon la revendication 1 ou 2,
l'unité empêchant de monter (10) présentant au moins un trou (16) pour la réception d'un boulon pivotant (17),
l'unité empêchant de monter étant pivotable par le boulon pivotant (17).

4. Système empêchant de monter selon la revendication 1, avec
au moins deux segments d'échelle (20) enfichés l'un dans l'autre, une première extrémité de l'unité de désactivation (40) s'engageant dans l'unité empêchant de monter (10) du premier segment d'échelle et une seconde extrémité de l'unité de désactivation (40) dans l'unité empêchant de monter (10) du second segment d'échelle et maintenant les deux unités empêchant de monter (10) dans la position de passage.

5. Segment de tour d'une tour d'une éolienne avec un système empêchant de monter selon l'une quelconque des revendications 1 à 4.

6. Eolienne avec au moins un segment de tour selon la revendication 5.
